# EUROPEAN PATENT APPLICATION

(11) **EP 3 793 234 A1**
(43) Date of publication of application: **17.03.2021**
(21) Application number: 18917727.2
(22) Date of filing: 10.05.2018
(51) Int. Cl.: H04W 16/14, H04W 74/08

(54) **TRANSMITTER**

(71) Applicant: NTT DOCOMO, INC., Chiyoda-ku Tokyo 100-6150 (JP)
(72) Inventor: MURAYAMA, Daisuke, Tokyo 100-6150 (JP); HARADA, Hiroki, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2018/018223
(87) International publication number: WO 2019/215896

(57) **Abstract**

A transmitting apparatus includes a transmitting section configured to transmit a signal on the basis of a result of listening in a first frequency band, a receiving section configured to receive a response signal responding to the signal, and a control section configured to determine an access method used for the listening on the basis of a result of comparison between the number of times the response signal has been received and a certain threshold.

## Description

### Technical Field

The present invention relates to a transmitting apparatus in a next-generation mobile communication system.

### Background Art

Specifications of existing LTE systems (e.g., Releases 8 to 12) have assumed exclusive operations in frequency bands (also referred to, e.g., as licensed bands, licensed carriers, or licensed component carriers (CCs)) licensed to telecommunications carriers (or operators). As licensed CCs, for example, 800 MHz, 1.7 GHz, and 2 GHz are used.

To broaden the frequency band, existing LTE systems (e.g., Release 13) support the use of frequency bands (also referred to, e.g., as unlicensed bands, unlicensed carriers, or unlicensed CCs) different from the licensed bands. Examples of the unlicensed bands include the 2.4 GHz band and the 5 GHz band that allow the use of Wi-Fi (registered trademark) and Bluetooth (registered trademark).

Specifically, Release 13 supports carrier aggregation (CA) that combines carriers (CCs) in the licensed band and carriers (CCs) in the unlicensed band. Communication that is carried out using both licensed and unlicensed bands is referred to as license-assisted access (LAA) (see Non-Patent Literature 1).

The application of LAA to future radio communication systems (e.g., 5G, 5G+, NR, and Release 15 and beyond) is also under consideration. The application of LAA to dual connectivity (DC) of licensed and unlicensed bands and to stand-alone (SA) operation in unlicensed bands may also be considered in the future.

### Citation List

### Non-Patent Literature

NPL 1: TS 36.30 V13.3.0 "Evolved Universal Terrestrial Radio Access (E-UTRA) and Evolved Universal Terrestrial Radio Access Network (E-UTRAN); Overall description; Stage 2 (Release 13)", April 2016.

### Summary of Invention

### Technical Problem

In LAA systems, a transmitting apparatus (e.g., radio base station in downlink, user terminal in uplink) performs listening, before data transmission in an unlicensed band, to check for the presence of signals transmitted by other apparatuses. Such listening is referred to, for example, as listen before talk (LBT), clear channel assessment (CCA), carrier sense, or channel access procedure.

In Wi-Fi systems using unlicensed bands, an access method called carrier sense multiple access/collision avoidance (CSMA/CA) is used as an LBT method.

To avoid "hidden terminal problems" in wireless communication using the CSMA/CA method, an access method called request to send/clear to send (RTS/CTS) is also used in Wi-Fi systems using unlicensed bands.

The use of these access methods, as LBT methods, in future LAA systems is also under consideration.

The present invention has been made in view of the points described above. An object of the present invention is to provide a transmitting apparatus that selects the most appropriate access method in a future LAA system. Solution to Problem

An aspect of a transmitting apparatus according to the present invention includes a transmitting section configured to transmit a signal on the basis of a result of listening in a first frequency band, a receiving section configured to receive a response signal responding to the signal, and a control section configured to determine an access method used for the listening on the basis of a result of comparison between the number of times the response signal has been received and a certain threshold.

### Advantageous Effects of Invention

The present invention makes it possible to select the most appropriate access method in a future LAA system.

### Brief Description of Drawings

[Fig. 1] Fig. 1 is a diagram illustrating an example of CSMA/CA with ACK.
[Fig. 2] Fig. 2 is a diagram illustrating an example of data collision caused by hidden terminals.
[Fig. 3] Fig. 3 is a diagram illustrating an example of CSMA/CA with RTS/CTS.
[Fig. 4] Fig. 4 is a diagram illustrating an example of RTS/CTS in a future LAA system.
[Fig. 5] Fig. 5 is a flowchart illustrating Method 1.
[Fig. 6] Fig. 6 is a flowchart illustrating Method 2.
[Fig. 7] Fig. 7 is a flowchart illustrating Method 3.
[Fig. 8] Fig. 8 is a flowchart illustrating Method 4.
[Fig. 9] Fig. 9A is a diagram illustrating an example of RTS format, and Fig. 9B is a diagram illustrating an example of CTS format.
[Fig. 10] Fig. 10 is a diagram schematically illustrating an exemplary configuration of a radio communication system according to the present embodiment.
[Fig. 11] Fig. 11 is a diagram illustrating an exemplary functional configuration of a radio base station according to the present embodiment.
[Fig. 12] Fig. 12 is a diagram illustrating an exemplary functional configuration of a baseband signal processing section of the radio base station.
[Fig. 13] Fig. 13 is a diagram illustrating an exemplary functional configuration of a user terminal according to the present embodiment.
[Fig. 14] Fig. 14 is a diagram illustrating an exemplary functional configuration of a baseband signal processing section of the user terminal.
[Fig. 15] Fig. 15 is a diagram illustrating an exemplary hardware configuration of the radio base station and the user terminal according to an embodiment of the present invention.

### Description of Embodiments

In an unlicensed band, a plurality of systems, such as Wi-Fi systems and LAA systems, are likely to coexist. This requires an access control method for avoiding collision of data transmission between the systems.

In Wi-Fi systems using unlicensed bands, an access method called CSMA/CA is employed as an LBT method.

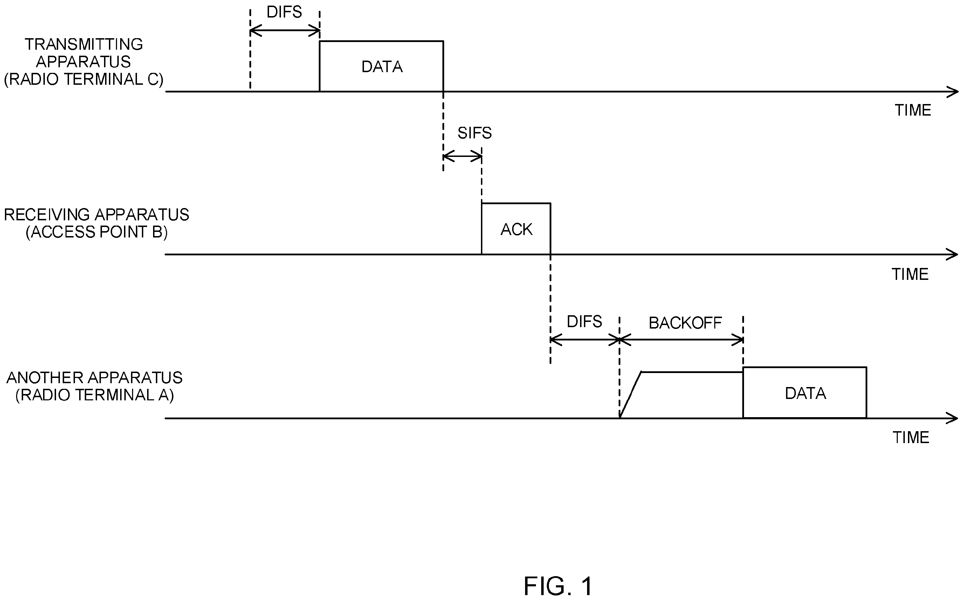

Fig. 1 is a diagram illustrating an example of CSMA/CA. Radio terminal C (data transmitting side) listens for signals on a communication medium (i.e., performs carrier sense) and does not immediately start data transmission even if it determines that no signal exists. As illustrated in Fig. 1, Radio terminal C starts to transmit data after waiting for a random period of time. This waiting time is referred to as a distributed inter-frame space (DIFS). Access point B (data receiving side) receives the data and returns a positive response (or acknowledgement (ACK)). To give priority to transmission of the ACK, Access point B can transmit the ACK after waiting for only a period of time (short IFS (SIFS)) shorter than the DIFS. Radio terminal C (data transmitting side) repeats retransmission until it receives the ACK. Therefore, the access method illustrated in Fig. 1 is also referred to as CSMA/CA with ACK.

While Radio terminal A (data transmitting side) is listening for signals on the communication medium, another terminal (Radio terminal C) is transmitting signals. Therefore, Radio terminal A waits before starting to transmit. After completion of the transmission in progress, that is, after reception of an ACK, Radio terminal A starts data transmission following a DIFS and a backoff period.

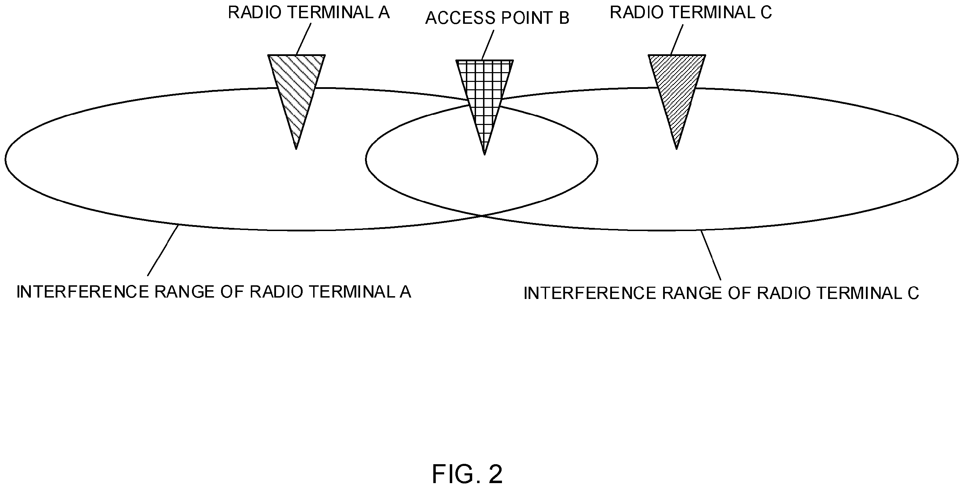

Fig. 2 is a diagram illustrating an example of data collision caused by hidden terminals. Referring to Fig. 2, even when data has been transmitted from Radio terminal C to Access point B, radio waves from Radio terminal C do not reach Radio terminal A. This means that even when performing carrier sense, Radio terminal A cannot recognize that Radio terminal C is transmitting data. If Radio terminal A transmits data in this state, signals transmitted from Radio terminal A and Radio terminal C collide at Access point B, and the data transmission performed by Radio terminal C fails. This is referred to as a "hidden terminal problem".

To avoid hidden terminal problems, an access method called RTS/CTS is introduced. This is a mechanism in which a terminal on the data transmitting side transmits an RTS as a transmission request before starting to transmit data, and a terminal on the data receiving side receives the RTS and transmits a CTS as a permission to transmit. The RTS includes the time required for data transmission, and the CTS includes the period during which data transmission is permitted. To avoid collisions of transmission signals, other terminals that have received RTS/CTS perform no transmission action during this period of time. This period is referred to as a transmission prohibition period (network allocation vector (NAV)). The access method using RTS/CTS is also referred to as CSMA/CA with RTS/CTS.

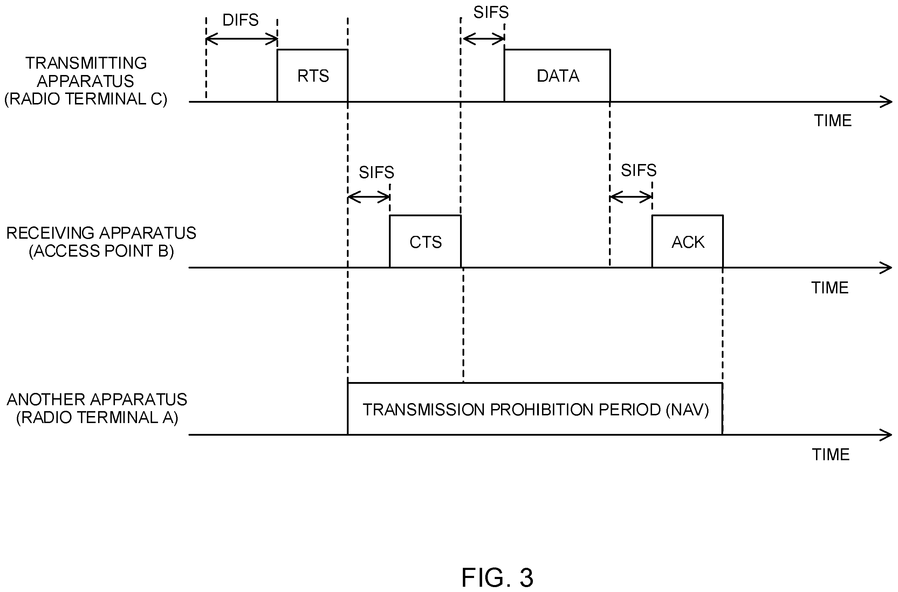

Fig. 3 is a diagram illustrating an example of CSMA/CA with RTS/CTS. As illustrated in Fig. 3, Radio terminal C (data transmitting side) listens for signals on the communication medium (i.e., performs carrier sense) and transmits an RTS after determining that no signal exists and the waiting time (DIFS) elapses. Access point B (data receiving side) receives the RTS and transmits a CTS after the waiting time (SIFS) elapses. Radio terminal C receives the CTS and transmits data after the waiting time (SIFS) elapses. Access point B receives the data and returns an ACK after the waiting time (SIFS) elapses.

All terminals located within the reach of radio waves of Radio terminal C and Access point B are notified through the RTS/CTS that communication will take place. The terminals that have detected the RTS/CTS do not interfere with data transmission, because they wait during the transmission prohibition period (NAV) period before starting to transmit. In the example illustrated in Fig. 2, the RTS transmitted by Radio terminal C does not reach Radio terminal A. However, since the CTS transmitted by Access point B reaches Radio terminal A, Radio terminal A recognizes that communication will take place and waits before starting to transmit. The hidden terminal problems are thus avoided.

To improve listening performance in future LAA systems, supporting both the CSMA/CA access method (hereinafter also described as "first access method" in the present specification) and the RTS/CTS access method (hereinafter also described as "second access method" in the present specification) is under consideration.

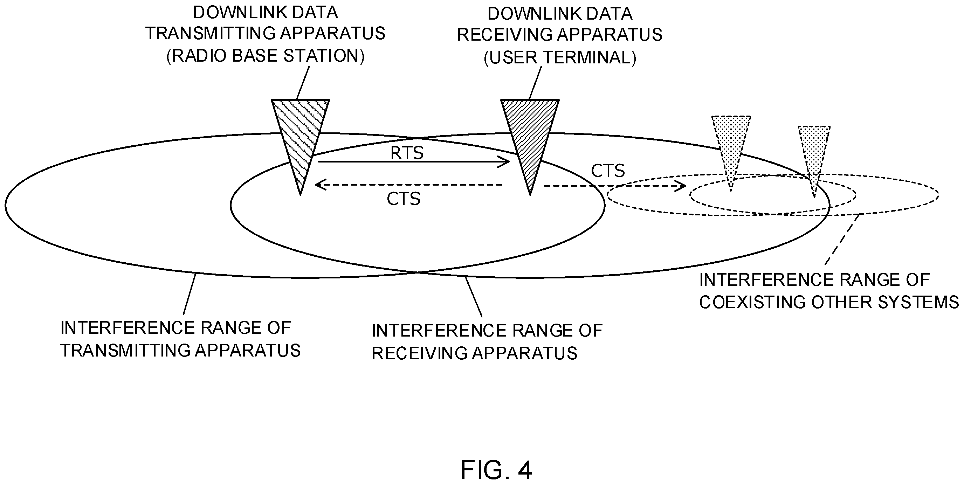

Fig. 4 is a diagram illustrating an example of the second access method in a future LAA system. This access method may be referred to, for example, as receiver assisted LBT or receiver assisted access.

In Fig. 4, the data transmitting side (transmitting apparatus) is a radio base station and the data receiving side (receiving apparatus) is a user terminal. Before starting data transmission, the radio base station transmits an RTS as a transmission request, and the user terminal receives the RTS and transmits a CTS as a permission to transmit. In the second access method, an RTS transmitted by the transmitting apparatus may be a message equivalent to the RTS, and a CTS received by the transmitting apparatus may be a message equivalent to the CTS.

In the second access method, both the RTS and CTS may be transmitted on a carrier in an unlicensed band. The RTS and CTS may be transmitted over the entire cell of an unlicensed CC (omnidirectional transmission) or may be transmitted after being subjected to beamforming in a certain direction. Both or one of the RTS and CTS may be in a format compliant with RTS or the IEEE 802.11 for Wi-Fi systems, or may be in a format unique to the LAA system.

In the second access method, one of the RTS and CTS may be transmitted on a carrier in an unlicensed band and the other may be transmitted on a carrier in a licensed band.

In the second access method, regardless of whether both the RTS and CTS are transmitted on a carrier in an unlicensed band or one of them is transmitted on a carrier in an unlicensed band, listening (e.g., LBT) is performed before initial transmission in the unlicensed band. As for transmission after the initial transmission in the unlicensed band, if the transmission starts within a certain time period (e.g., SIFS) of completion of the previous transmission, listening may be skipped or shortened.

In the second access method, a carrier for transmitting the RTS and CTS may be dynamically or quasi-statically switched.

If the future LAA system supports the first access method as the LBT method, the system has the advantage that the overhead of control frames is smaller than when supporting the second access method. However, if hidden terminals exist, signal collisions caused by the hidden terminals occur and throughput decreases.

If the future LAA system supports the second access method as the LBT method, the system has the advantage that signal collisions caused by hidden terminals can be avoided. However, if no or only very few hidden terminals exist, unnecessary overhead occurs and throughput decreases.

Accordingly, the present inventors have discovered means to select the most appropriate access method when the communication environment changes depending on, for example, the presence or absence of interference from hidden terminals.

Hereinafter, the present embodiment will be described in detail with reference to the attached drawings.

In the present embodiment, an unlicensed CC may be referred to, for example, as a carrier (cell or CC) in the first frequency band, a carrier (cell or CC) in an unlicensed band, or LAA SCell. A licensed CC may be referred to, for example, as a carrier (cell or CC) in the second frequency band, a carrier (cell or CC) in a licensed band, primary cell (PCell), or SCell.

In the present embodiment, the unlicensed CC may be LTE-based or NR-based (NR unlicensed CC), and the licensed CC may be LTE-based or NR-based. In an LAA system (radio communication system) of the present embodiment, unlicensed and licensed CCs are subjected to carrier aggregation (CA) or dual connectivity (DC) in only one of LTE and NR systems (standalone), or may be subjected to CA or DC between LTE and NR systems (non-standalone).

Future LAA systems may be referred to as NR unlicensed (NR-U) systems. The LAA systems may be compliant with (or may support) a first wireless communication standard (e.g., NR or LTE).

Other systems (coexisting systems or coexisting apparatuses) and other radio communication apparatuses (coexisting apparatuses) that coexist with the LAA systems may be compliant with (or may support) a second wireless communication standard, such as Wi-Fi, Bluetooth, Wireless Gigabit (WiGig) (registered trademark), wireless local area network (LAN), or IEEE 802.11, that is different from the first wireless communication standard. Coexisting systems may be systems that are subjected to interference from the LAA systems, or may be systems that interfere with the LAA systems. The coexisting systems may support RTS and CTS, or may support a transmission request signal and a ready-to-receive signal equivalent to RTS and CTS.

The present embodiment assumes that the first access method is the CSMA/CA access method, but the first access method is not limited to this and may be other access control methods. The present embodiment also assumes that the second access method is the RTS/CTS access method, but the second access method is not limited to this and may be other access control methods.

### (Radio Communication Method)

The following description assumes that in collision control for downlink data transmission, the transmitting apparatus is a radio base station (e.g., gNB: gNodeB, transmission reception point (TRP), or transmission point) and the receiving apparatus is a user terminal (e.g., user equipment (UE)). The following description also assumes that in collision control for uplink data transmission, the transmitting apparatus and the receiving apparatus may be switched, so that the user terminal and the radio base station serve as the transmitting apparatus and the receiving apparatus, respectively.

Before data transmission in an unlicensed band, a data transmitting side (transmitting apparatus) performs listening (e.g., LBT). In this case, the transmitting apparatus may perform at least one of Methods 1 to 4.

### (Method 1)

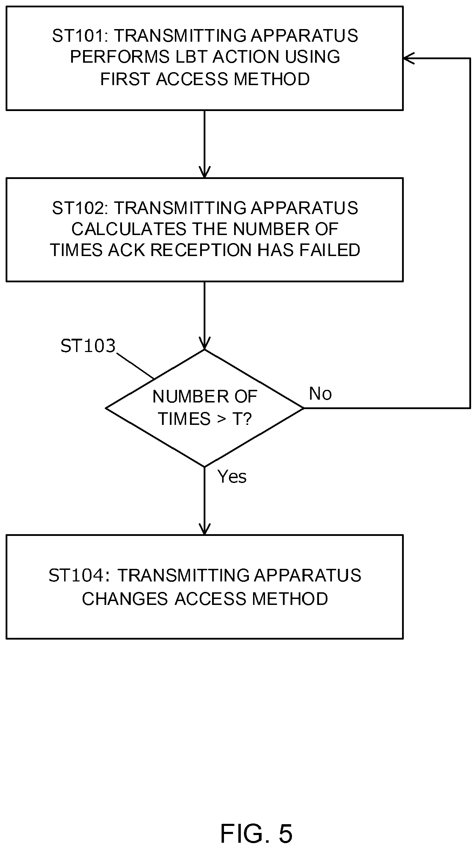

Fig. 5 is a flowchart illustrating Method 1. As illustrated in Fig. 5, the transmitting apparatus performs an LBT action using the first access method (ST101). Upon detecting, through the LBT action, that a radio resource is in an idle state, the transmitting apparatus transmits data. The transmitting apparatus then calculates the number of times it has failed to receive an ACK (or the frequency of ACK reception failures) following the data transmission (ST102).

If the number of times exceeds a certain threshold T (i.e., if it is above the threshold T or greater than or equal to the threshold T) (Yes in ST103), the transmitting apparatus selects the second access method as the LBT method executed before communicating with a data receiving side (receiving apparatus). That is, the transmitting apparatus changes the access method used as the LBT method (ST104).

If the number of times does not exceed the certain threshold T (i.e., if it is less than or equal to the threshold T or below the threshold T) (No in ST103), the transmitting apparatus continues to use the first access method as the LBT method.

In Method 1, when the transmitting apparatus fails to receive an ACK after detecting an idle state and transmitting data, a signal collision caused by hidden terminals is probably occurring. If the number of times the transmitting apparatus has failed to receive an ACK exceeds the threshold, the current communication environment is likely to be an environment where hidden terminals tend to emerge. In this case, by selecting the second access method as the LBT method to avoid signal collisions caused by hidden terminals, it is possible to improve listening performance.

In Method 1, when the number of times ACK reception has failed does not exceed the threshold, the current communication environment is likely to be an environment where hidden terminals tend not to emerge. In this case, by selecting the first access method as the LBT method, it is possible to reduce overhead and improve throughput.

Method 1 may define a negative response (negative-acknowledgement (NACK)) and may calculate the number of times the transmitting apparatus has received a NACK, instead of calculating the number of times the transmitting apparatus has failed to receive an ACK.

In Method 1, the threshold for the number of times ACK reception has failed may be either specified on the network side or defined in the specification. Alternatively, the transmitting apparatus may dynamically or quasi-statically control the threshold.

### (Method 2)

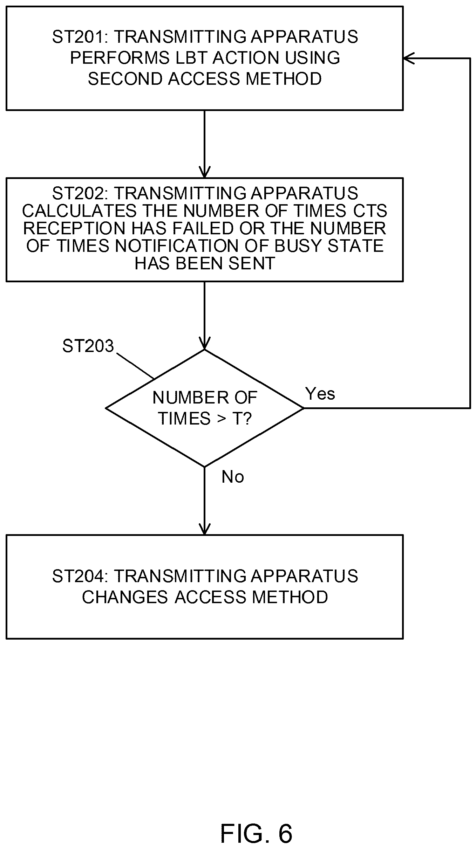

Fig. 6 is a flowchart illustrating Method 2. As illustrated in Fig. 6, the transmitting apparatus performs an LBT action using the second access method (ST201). Upon detecting, through the LBT action, that a radio resource is in an idle state, the transmitting apparatus transmits an RTS. The transmitting apparatus then calculates the number of times it has failed to receive a CTS following the RTS transmission (ST202). Alternatively, the transmitting apparatus calculates the number of times it has notified in a licensed band that the result of the LBT is "busy state" (ST202) .

If at least one of these numbers of times exceeds a certain threshold T (i.e., the number of times is above the threshold T or greater than or equal to the threshold T) (Yes in ST203), the transmitting apparatus continues to use the second access method as the LBT method executed before communicating with a data receiving side (receiving apparatus).

If at least one of these numbers of times does not exceed the certain threshold T (i.e., if it is less than or equal to the threshold T or below the threshold T) (No in ST203), the transmitting apparatus selects the first access method as the LBT method. That is, the transmitting apparatus changes the access method used as the LBT method (ST204) .

In Method 2, when the transmitting apparatus fails to receive a CTS after transmitting an RTS, the receiving apparatus probably did not transmit an CTS because it had not detected an idle state. In this state and in the state where the result of the LBT is "busy state", the current communication environment is likely to be an environment where hidden terminals tend to emerge due to the presence of other transmitting apparatuses. Therefore, when the number of times the transmitting apparatus has failed to receive a CTS or the number of times the transmitting apparatus has sent a notification of busy state exceeds the threshold, the second access method is selected as the LBT method. This makes it possible to avoid signal collisions caused by hidden terminals, and thus to improve listening performance.

In Method 2, when the number of times CTS reception has failed or the number of times a notification of busy state has been sent does not exceed the threshold, the current communication environment is likely to be an environment where hidden terminals tend not to emerge. In this case, by selecting the first access method as the LBT method, it is possible to reduce overhead and improve throughput.

In Method 2, an RTS transmitted by the transmitting apparatus may be a message equivalent to the RTS, and a CTS received by the transmitting apparatus may be a message equivalent to the CTS.

In Method 2, the threshold for the number of times CTS reception has failed or the number of times a busy state has been detected may be either specified on the network side or defined in the specification. Alternatively, the transmitting apparatus may dynamically or quasi-statically control the threshold.

### (Method 3)

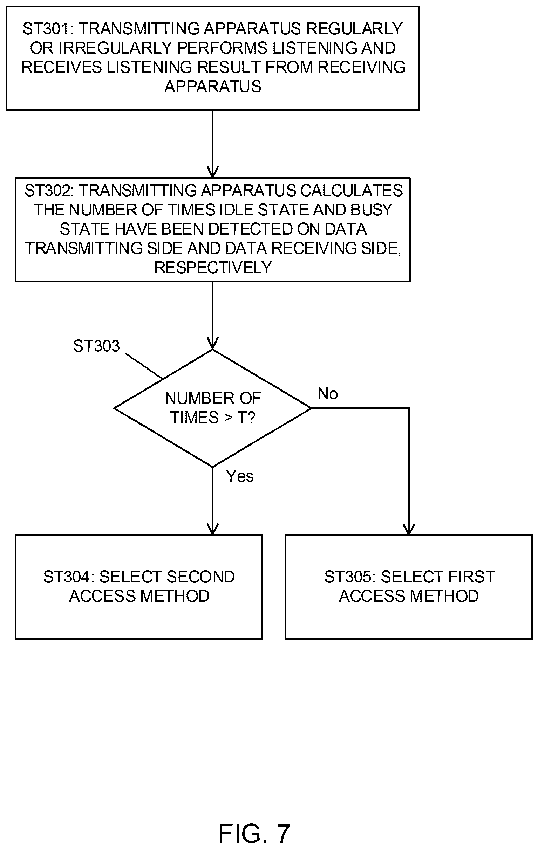

Fig. 7 is a flowchart illustrating Method 3. As illustrated in Fig. 7, the transmitting apparatus (e.g., transmission reception point (TRP)) and the receiving apparatus (e.g., user terminal) regularly or irregularly performs listening regardless of whether there is a data transmission request (ST301). The timing of when to perform listening may be specified by the transmitting apparatus. The receiving apparatus notifies the transmitting apparatus of the result of the listening (ST301). From the result of the listening, the transmitting apparatus calculates the number of times an idle state and a busy state have been detected on the data transmitting side and the data receiving side, respectively (ST302).

If the number of times exceeds a certain threshold T (i.e., if it is above the threshold T or greater than or equal to the threshold T) (Yes in ST303), the transmitting apparatus selects the second access method as the listening method executed before communicating with the receiving apparatus (ST304).

If the number of times does not exceed the certain threshold T (i.e., if it is less than or equal to the threshold T or below the threshold T) (No in ST303), the transmitting apparatus selects the first access method as the listening method executed before communicating with the receiving apparatus (ST305).

In Method 3, when an idle state and a busy state are detected on the data transmitting side and the data receiving side, respectively, there is a possibility that hidden terminals exist. If the number of times these different listening results have been detected exceeds the threshold, the current communication environment is probably an environment where hidden terminals tend to emerge. In this case, by selecting the second access method as the listening method to avoid signal collisions caused by hidden terminals, it is possible to improve listening performance.

In Method 3, when the number of times an idle state and a busy state have been detected on the data transmitting side and the data receiving side, respectively, does not exceed the threshold, the current communication environment is likely to be an environment where hidden terminals tend not to emerge. In this case, by selecting the first access method as the listening method, it is possible to reduce overhead and improve throughput.

In Method 3, from the listening result, the transmitting apparatus can also calculate the number of times a busy state and an idle state have been detected on the data transmitting side and the data receiving side, respectively. On the basis of this number of times, the transmitting apparatus (e.g., TRP) can estimate whether there are hidden terminals when the current data transmitting side and the current data receiving side are switched to the data receiving side and the data transmitting side, respectively (i.e., when the direction of data transmission is reversed to switch the data transmitting side and the data receiving side).

The transmitting apparatus (current data transmitting side) may notify the receiving apparatus (current data receiving side) that if the number of times described above exceeds the certain threshold, the receiving apparatus is to select the second access method as the listening method when switched. Also, the transmitting apparatus (current data transmitting side) may notify the receiving apparatus (current data receiving side) that if the number of times described above does not exceed the certain threshold, the receiving apparatus is to select the first access method as the listening method when switched. When the direction of data transmission is reversed, the apparatus that has received the notification is switched to the data transmitting side and can use the listening method specified by the notification.

### (Method 4)

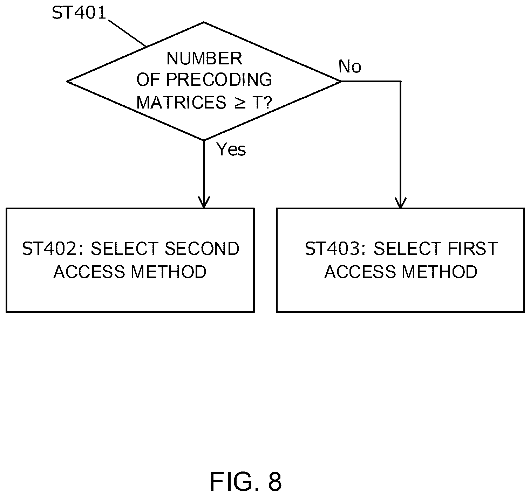

Fig. 8 is a flowchart illustrating Method 4. As illustrated in Fig. 8, if the transmitting apparatus performs beamforming with a number of precoding matrices more than or equal to a certain threshold T, which is defined in advance by the system including the transmitting apparatus (Yes in ST401), the transmitting apparatus selects the second access method as the listening method executed before communicating with the receiving apparatus (ST402).

If the transmitting apparatus performs beamforming with a number of precoding matrices fewer than the certain threshold, which is defined in advance by the system including the transmitting apparatus (No in ST401), the transmitting apparatus selects the first access method as the listening method executed before communicating with the receiving apparatus (ST403).

The transmitting apparatus may use at least one of Methods 1 to 4, or may use two or more of Methods 1 to 4 in combination.

For example, the transmitting apparatus may use Method 1 and Method 2 in combination. When selecting the first access method as the LBT method, the transmitting apparatus calculates the number of times it has failed to receive an ACK in accordance with Method 1. When selecting the second access method as the LBT method, the transmitting apparatus calculates the number of times it has failed to receive a CTS or the number of times it has sent a notification of busy state in accordance with Method 2.

The transmitting apparatus appropriately selects an access method in accordance with Method 1 and Method 2 and changes the access method used as the LBT method. By using Policy 1 and Policy 2 in combination, the most appropriate access method can be selected even when the communication environment changes depending on, for example, the presence or absence of interference from hidden terminals. It is thus possible to prevent degradation of throughput and improve listening performance.

The transmitting apparatus may use Method 1 alone, instead of using it in combination with Method 2. In this case, the transmitting apparatus sets the first access method as the access method for the initial state (or default access method), used as the LBT method. Even when the access method has been changed in accordance with Method 1, the transmitting apparatus may regularly reset the access method to that for the initial state. Alternatively, even when the access method has been changed in accordance with Method 1, if, for example, channel state information (CSI) feedback indicates that the level of channel quality is at or below the threshold, the transmitting apparatus may reset the access method to that for the initial state.

The transmitting apparatus may use Method 2 alone, instead of using it in combination with Method 1. In this case, the transmitting apparatus sets the second access method as the access method for the initial state (or default access method), used as the LBT method. Even when the access method has been changed in accordance with Method 2, the transmitting apparatus may regularly reset the access method to that for the initial state. Alternatively, even when the access method has been changed in accordance with Method 2, if, for example, channel state information (CSI) feedback indicates that the level of channel quality is at or below the threshold, the transmitting apparatus may reset the access method to that for the initial state.

When Method 1 and Method 2 are used in combination, the access method set by the transmitting apparatus as the access method for the initial state (or default access method) may either be the first access method or the second access method. When Method 1 and Method 2 are used in combination, the transmitting apparatus may or may not configure the action of resetting the access method.

In Methods 1 to 3, the number of times calculated for comparison with the threshold may be the average of values obtained at regular intervals (e.g., every ten seconds or every five seconds). That is, the transmitting apparatus may calculate the number of times using a moving average, such as a simple moving average, weighted moving average, or exponential moving average. The number of last seconds during which data is valid, or parameters used to determine the moving average, such as the functions of weighting past data, may be values determined in advance. For example, in accordance with the speed of environmental change or the speed of movement, the transmission reception point may configure the parameters and notify the user terminal of the parameters. Alternatively, the user terminal may notify the transmission reception point of instantaneous values alone, and the transmission reception point may perform a moving averaging procedure.

As described above, by using at least one of Methods 1 to 4 or using two or more of Methods 1 to 4 in combination, the most appropriate access method can be selected even when the communication environment changes depending on, for example, the presence or absence of interference from hidden terminals. It is thus possible to prevent degradation of throughput and improve listening performance.

### (RTS and CTS Format)

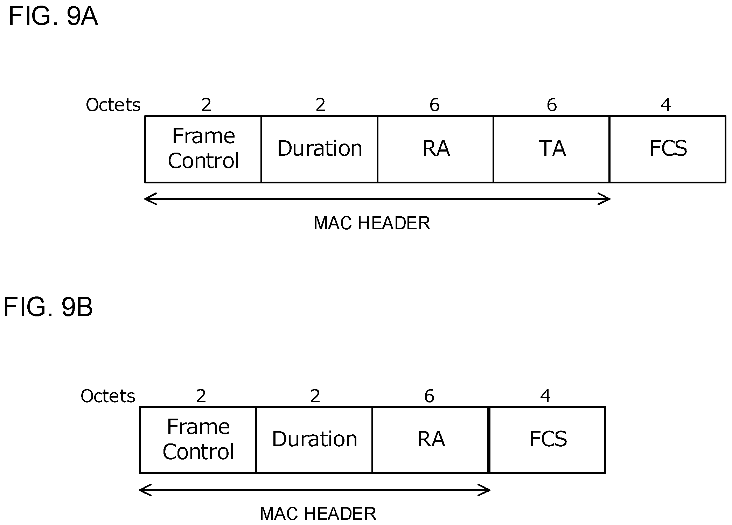

An RTS and CTS format (also referred to, e.g., as signal format or frame format) according to the present embodiment will now be described with reference to Fig. 9. An RTS described herein implies a message equivalent to the RTS, and a CTS described herein implies a message equivalent to the CTS.

Fig. 9A illustrates an example of RTS format compliant with another system (e.g., IEEE 802.11). In Fig. 9A, the duration region may indicate at least the time required for data transmission or the amount of data (or the number of octets) .

In Fig. 9A, an identifier for the receiving apparatus may be stored in the region (receiver address (RA) region) for storing the medium access control (MAC) address of the data receiving side. For example, if the receiving apparatus is a user terminal, the identifier is a UE ID. An identifier for the transmitting apparatus maybe stored in the region (transmitter address (TA) region) for storing the MAC address of the data transmitting side. For example, if the transmitting apparatus is a radio base station, the identifier is a cell ID. An RTS number may be stored in part of the RA region or the TA region.

Another RTS format not compliant with other systems may include at least a region indicating that this is an RTS, a region indicating at least the time required for data transmission or the amount of data, a region for identifying the receiver, and a region for identifying the transmitter.

Another RTS format not compliant with other systems may be DCI that is transmitted over a downlink control channel (e.g., physical downlink control channel (PDCCH)). For example, DCI (UL grant) for scheduling a PUSCH may be this RTS format. In this case, the receiving apparatus (e.g., user terminal) may transmit a CTS using the PUSCH scheduled by the DCI.

Fig. 9B illustrates an example of CTS format compliant with another system (e.g., IEEE 802.11). In Fig. 9B, the duration region may indicate at least the time required for data transmission or the amount of data (the number of octets). An identifier for the receiving apparatus may be stored in the RA region in Fig. 9B. For example, if the receiving apparatus is a user terminal, the identifier is a UE ID. The identifier may include identification information of a transmitter (e.g., radio base station in transmission of downlink data) that transmits an RTS corresponding to a CTS.

The receiving apparatus (e.g., user terminal) may perform beamforming. The transmitting apparatus (e.g., radio base station) may repeat transmission of a plurality of RTSs, each using a plurality of transmission beams, at certain intervals. The number of repetitions may be greater than or equal to the number of reception beams that can be used by the receiving apparatus.

### (Scheduling)

The receiving apparatus (e.g., user terminal) transmits a CTS using, for example, one of the following: (1) PUSCH scheduled by UL grant, (2) PUSCH not scheduled by UL grant (PUSCH configured by higher-layer signaling or grant-free PUSCH), and (3) PUCCH.

In the case of (1), after transmitting an RTS on a carrier in a licensed band, the transmitting apparatus (e.g., radio base station) may transmit a UL grant for scheduling a PUSCH on the carrier in the licensed band. The UL grant may be transmitted simultaneously with the RTS, transmitted after transmission of the RTS, or transmitted before transmission of the RTS by considering the processing speed of the receiving apparatus (e.g., user terminal).

After successfully receiving the RTS and detecting an idle state through listening, the receiving apparatus (e.g., user terminal) transmits a CTS using a PUSCH scheduled by the UL grant. The receiving apparatus (e.g., user terminal) may start listening upon receiving the UL grant, or after successfully receiving the RTS. By controlling the timing of when to transmit the UL grant as described above, the transmitting apparatus (e.g., radio base station) can quickly receive the CTS.

In the case of (2) or (3), where a PUSCH does not require scheduling, the transmitting apparatus (e.g., radio base station) is not required to transmit the UL grant.

### (Handling of RTS Not Addressed to Own Apparatus)

If the receiving apparatus (e.g., user terminal) detects an RTS not addressed to the own apparatus, the receiving apparatus may ignore the RTS and is not required to transmit a CTS.

If the receiving apparatus (e.g., user terminal) detects an RTS not addressed to the own apparatus and recognizes the start of data transmission to another apparatus, the receiving apparatus may stop data transmission to be performed in the time period indicated by the duration region of the RTS.

### (Radio Communication System)

A configuration of a radio communication system according to the present embodiment will now be described. The radio communication method according to the embodiment described above is applied to this radio communication system.

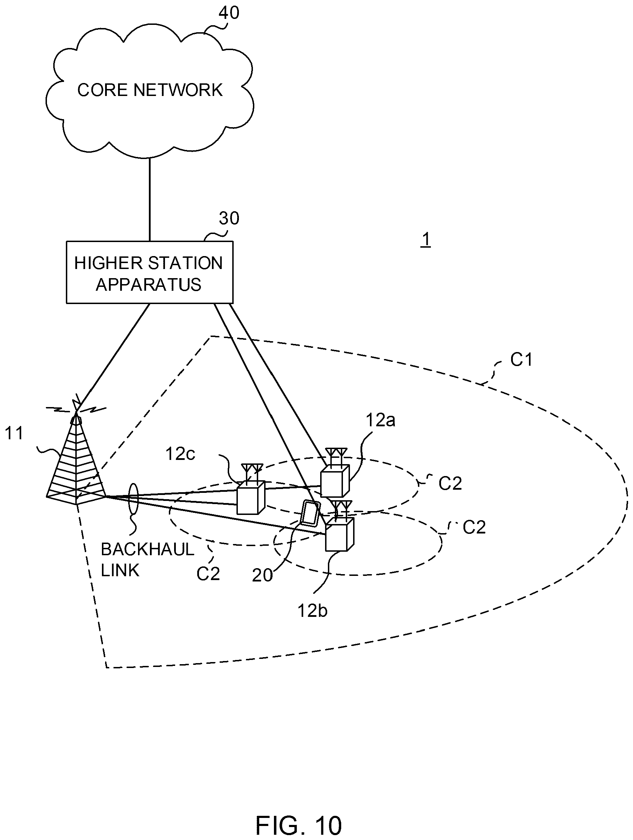

Fig. 10 is a diagram schematically illustrating an exemplary configuration of a radio communication system according to the present embodiment. Carrier aggregation (CA) or dual connectivity (DC) that combines a plurality of fundamental frequency blocks (component carriers), each corresponding to a unit of LTE system bandwidth (e.g., 20 MHz), is applicable to a radio communication system 1. The radio communication system 1 may also be referred to, for example, as SUPER 3G, LTE-Advanced (LTE-A), IMT-Advanced, 4G, 5G, future radio access (FRA), or new RAT (NR).

The radio communication system 1 illustrated in Fig. 10 includes a radio base station 11 forming a macro cell C1, and radio base stations 12a to 12c placed within the macro cell C1 and forming small cells C2 narrower than the macro cell C1. A user terminal 20 is placed in the macro cell C1 and each of the small cells C2. Different numerologies may be applied to different cells. The term numerology refers to a set of communication parameters that characterize the design of signals in a given RAT and the design of the RAT.

The user terminal 20 can connect to both the radio base station 11 and the radio base stations 12. It is assumed that the CA or DC enables the user terminal 20 to simultaneously use the macro cell C1 and the small cells C2, which use different frequencies. The user terminal 20 can adopt the CA or DC by using a plurality of cells (CCs) (e.g., two or more CCs). The user terminal can use licensed band CCs and unlicensed band CCs as the plurality of cells. Some of the plurality of cells may include TDD carriers that use a shortened TTI.

The user terminal 20 and the radio base station 11 can communicate using a carrier (referred to, e.g., as existing carrier or legacy carrier) with a narrow bandwidth in a relatively low frequency band (e.g., 2 GHz). The user terminal 20 and each of the radio base stations 12 may communicate using a carrier with a wide bandwidth in a relatively high frequency band (e.g., 3.5 GHz, 5 GHz, or 30 GHz to 70 GHz), or using the same carrier as that used between the user terminal 20 and the radio base station 11. The configuration of frequency bands used by the radio base stations is not limited to this.

The connection between the radio base station 11 and each radio base station 12 (or connection between two radio base stations 12) may be a wired connection (through, e.g., an optical fiber compliant with the Common Public Radio Interface (CPRI) standard, or the X2 interface) or a wireless connection.

The radio base station 11 and the radio base stations 12 are each connected to a higher station apparatus 30, and connected through the higher station apparatus 30 to a core network 40. Examples of the higher station apparatus 30 include, but are not limited to, an access gateway apparatus, a radio network controller (RNC), and a mobility management entity (MME). Each of the radio base stations 12 may be connected through the radio base station 11 to the higher station apparatus 30.

The radio base station 11 is a radio base station having a relatively wide coverage and may be referred to, for example, as a macro base station, an aggregation node, an eNB (eNodeB), or a transmission reception point. The radio base stations 12 are each a radio base station having a local coverage and may each be referred to, for example, as a small base station, a micro base station, a pico base station, a femto base station, a home eNodeB (HeNB), a remote radio head (RRH), or a transmission reception point. Hereinafter, the radio base stations 11 and 12 may be collectively referred to as a radio base station 10 without distinction.

The user terminals 20 are terminals that support various communication methods, such as LTE and LTE-A. The user terminals 20 may include fixed communication terminals, as well as mobile communication terminals.

As radio access methods in the radio communication system 1, orthogonal frequency-division multiple access (OFDMA) and single-carrier frequency-division multiple access (SC-FDMA) are applicable to downlink (DL) and uplink (UL), respectively. The OFDMA is a multi-carrier transmission method that divides a frequency band into a plurality of narrow frequency bands (subcarriers) and maps data to each of the subcarriers for communication. The SC-FDMA is a single-carrier transmission method that divides, for each terminal, the system bandwidth into bands each including one or contiguous resource blocks, allows a plurality of terminals to use different bands, and thereby reduces interference between the terminals. The radio access methods applied to uplink and downlink are not limited to this combination, and the OFDMA may be applied to UL.

Examples of DL channels used in the radio communication system 1 include a downlink data channel (also referred to, e.g., as physical downlink shared channel (PDSCH) or downlink shared channel) shared by the user terminals 20, a broadcast channel (physical broadcast channel (PBCH)), and L1/L2 control channels. The PDSCH allows transmission of, for example, user data, higher-layer control information, and a system information block (SIB). The PBCH allows transmission of a master information block (MIB).

The L1/L2 control channels include, for example, downlink control channels (physical downlink control channel (PDCCH) and enhanced physical downlink control channel (EPDCCH)), a physical control format indicator channel (PCFICH), and a physical hybrid-ARQ indicator channel (PHICH). The PDCCH allows transmission of, for example, downlink control information (DCI) including PDSCH and PUSCH scheduling information. The PCFICH allows transmission of the number of OFDM symbols used in the PDCCH. The PHICH allows transmission of HARQ acknowledgement information (ACK/NACK) for the PUSCH. The EPDCCH is frequency-division-multiplexed with the downlink shared data channel (PDSCH) and used for transmission of, for example, DCI, similarly to the PDCCH.

Examples of UL channels used in the radio communication system 1 include an uplink data channel (also referred to, e.g., as physical uplink shared channel (PUSCH) or uplink shared channel) shared by the user terminals 20, an uplink control channel (or physical uplink control channel (PUCCH)), and a random access channel (physical random access channel (PRACH)). The PUSCH allows transmission of user data and higher-layer control information. Uplink control information (UCI), including at least one of acknowledgement information (ACK/NACK), wireless quality information (CQI), and so on is transmitted over the PUSCH or PUCCH. The PRACH allows transmission of a random access preamble for establishing connection with the cell.

### <Radio Base Station>

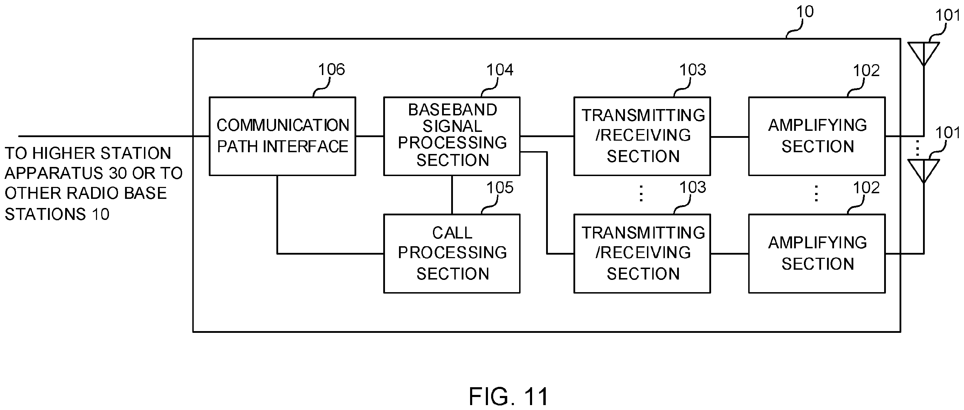

Fig. 11 is a diagram illustrating an exemplary overall configuration of a radio base station according to the present embodiment. The radio base station 10 includes a plurality of transmitting/receiving antennas 101, a plurality of amplifying sections 102, a plurality of transmitting/receiving sections 103, a baseband signal processing section 104, a call processing section 105, and a communication path interface 106. The radio base station 10 may be configured to include at least one transmitting/receiving antenna 101, at least one amplifying section 102, and at least one transmitting/receiving section 103. The radio base station 10 may be a downlink data transmitting apparatus and uplink data receiving apparatus.

Downlink data to be transmitted from the radio base station 10 to the user terminal 20 is received from the higher station apparatus 30 and input through the communication path interface 106 to the baseband signal processing section 104.

In the baseband signal processing section 104, the downlink data is subjected to transmission processing, such as packet data convergence protocol (PDCP) layer processing, division and coupling of user data, radio link control (RLC) layer transmission processing such as RLC retransmission control, medium access control (MAC) retransmission control (e.g., HARQ transmission processing), scheduling, transmission format selection, channel coding, inverse fast Fourier transform (IFFT) processing, and precoding processing, and the resulting data is transferred to each transmitting/receiving section 103. A downlink control signal is also subjected to transmission processing, such as channel coding and inverse fast Fourier transform, and the resulting signal is transferred to each transmitting/receiving section 103.

By the transmitting/receiving section 103, a baseband signal precoded for each antenna and output from the baseband signal processing section 104 is converted to a signal in a radio frequency band and transmitted. The radio frequency signal obtained by frequency conversion in the transmitting/receiving section 103 is amplified by the amplifying section 102 and transmitted from the transmitting/receiving antenna 101. The transmitting/receiving section 103 may be constituted by a transmitter/receiver, a transmitting/receiving circuit, or a transmitting/receiving apparatus explained on the basis of a common understanding in the technical field of the present invention. The transmitting/receiving section 103 may be configured as a single section, or may be composed of a transmitting section and a receiving section.

As for an uplink signal, a radio frequency signal received by the transmitting/receiving antenna 101 is amplified by the amplifying section 102. The transmitting/receiving section 103 receives the uplink signal amplified by the amplifying section 102. The transmitting/receiving section 103 frequency-converts the received signal to a baseband signal and outputs it to the baseband signal processing section 104.

In the baseband signal processing section 104, user data included in the input uplink signal is subjected to fast Fourier transform (FFT) processing, inverse discrete Fourier transform (IDFT) processing, error correction decoding, MAC retransmission control reception processing, and RLC layer and PDCP layer reception processing, and is transferred through the communication path interface 106 to the higher station apparatus 30. The call processing section 105 performs call processing, such as configuring and release of a communication channel, manages the state of the radio base station 10, and manages radio resources.

The communication path interface 106 transmits and receives signals to and from the higher station apparatus 30 through a certain interface. The communication path interface 106 may transmit and receive signals (perform backhaul signaling) to and from another radio base station 10 through an inter-base-station interface (e.g., optical fiber compliant with the Common Public Radio Interface (CPRI), or the X2 interface).

The transmitting/receiving section 103 transmits downlink signals (e.g., downlink control signal (downlink control channel), downlink data signals (downlink data channel and downlink shared channel), downlink reference signals (e.g., DM-RS and CSI-RS), discovery signal, synchronization signal, and broadcast signal). The transmitting/receiving section 103 receives uplink signals (e.g., uplink control signal (uplink control channel), uplink data signals (uplink data channel and uplink shared channel), and uplink reference signal).

The transmitting/receiving section 103 may transmit a signal on the basis of the result of listening on an unlicensed CC (first frequency band). The signal includes a data signal and an RTS (transmission request signal). The transmitting/receiving section 103 may transmit the signal on one of the unlicensed CC (first frequency band) and the licensed CC (second frequency band). The transmitting/receiving section 103 may receive a response signal responding to the signal. The response signal includes an ACK (positive response) and a CTS (response signal responding to transmission request signal). The transmitting/receiving section 103 may receive the response signal on one of the unlicensed CC (first frequency band) and the licensed CC (second frequency band). The transmitting/receiving section 103 may transmit or receive the result of listening on the unlicensed CC (first frequency band).

A transmitting section and a receiving section of the present invention are constituted by both or one of the transmitting/receiving section 103 and the communication path interface 106.

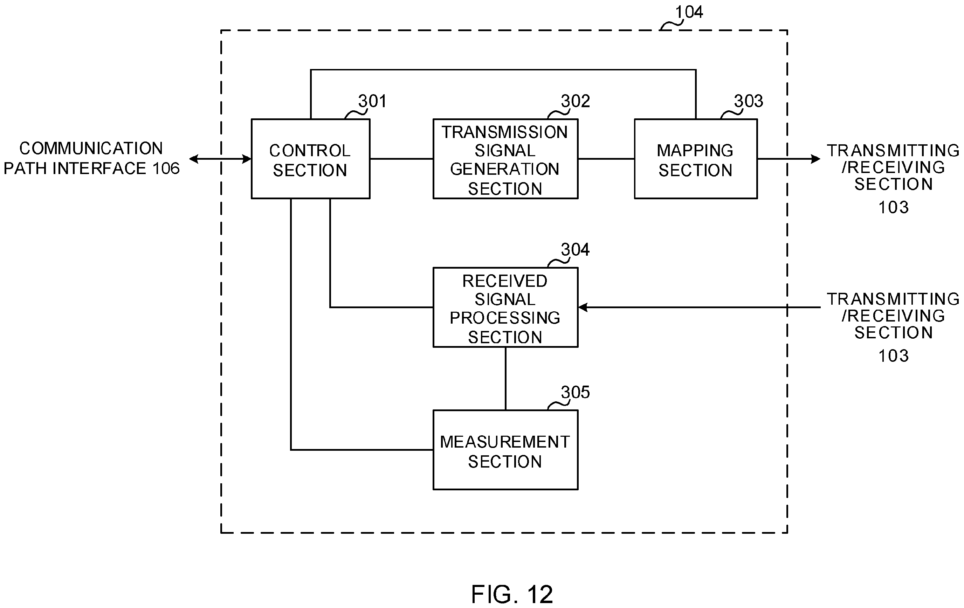

Fig. 12 is a diagram illustrating an exemplary functional configuration of a radio base station according to the present embodiment. Fig. 12 mainly shows functional blocks representing a feature of the present embodiment. That is, the radio base station 10 includes other functional blocks required for radio communication. As illustrated in Fig. 12, the baseband signal processing section 104 includes at least a control section 301, a transmission signal generating unit 302, a mapping section 303, a received signal processing section 304, and a measurement section 305.

The control section 301 controls the entire radio base station 10. The control section 301 may be constituted by a controller, a control circuit, or a control apparatus explained on the basis of a common understanding in the technical field of the present invention.

The control section 301 controls, for example, signal generation by the transmission signal generating unit 302, and signal assignment by the mapping section 303. The control section 301 also controls signal reception processing by the received signal processing section 304, and signal measurement by the measurement section 305.

The control section 301 controls scheduling (e.g., resource allocation) of downlink and uplink signals. Specifically, the control section 301 controls the transmission signal generating unit 302, the mapping section 303, and the transmitting/receiving section 103 so as to generate and transmit DCI (DL assignment, DL grant) including downlink data channel scheduling information and DCI (UL grant) including uplink data channel scheduling information.

The control section 301 may control signal transmission or reception on the unlicensed CC (first frequency band) or the licensed CC (second frequency band).

The control section 301 may determine the access method (e.g., first access method or second access method) used for listening, on the basis of the result of comparison between the number of times the transmitting/receiving section 103 has received a response signal and a certain threshold.

Specifically, the control section 301 may determine the access method used for listening, on the basis of the result of comparison between the number of times an ACK (positive response) has been received and a certain threshold (Fig. 5). The control section 301 may determine the access method used for listening, on the basis of the result of comparison between the number of times a CTS (response signal responding to transmission request signal) has been received and a certain threshold (Fig. 6). The control section 301 may determine the access method used for listening, on the basis of the result of comparison between the number of times a notification of busy state has been sent as a listening result and a certain threshold (Fig. 6). The control section 301 may determine the access method used for listening, on the basis of the result of comparison between the number of times the result of listening performed by the apparatus including the control section 301 is "idle state" and the received listening result is "busy state", and a certain threshold (Fig. 7).

The transmission signal generating unit 302 generates downlink signals (e.g., downlink control channel, downlink data channel, and downlink reference signal such as DM-RS) on the basis of an instruction from the control section 301 and outputs the generated downlink signals to the mapping section 303. The transmission signal generating unit 302 may be constituted by a signal generator, a signal generating circuit, or a signal generating apparatus explained on the basis of a common understanding in the technical field of the present invention.

The mapping section 303 maps the downlink signals generated by the transmission signal generating unit 302 to certain radio resources on the basis of an instruction from the control section 301, and outputs the mapped downlink signals to the transmitting/receiving section 103. The mapping section 303 may be constituted by a mapper, a mapping circuit, or a mapping apparatus explained on the basis of a common understanding in the technical field of the present invention.

The received signal processing section 304 performs reception processing (e.g., demapping, demodulation, and decoding) on reception signals received as input from the transmitting/receiving section 103. For example, the reception signals are uplink signals (e.g., uplink control channel, uplink data channel, and uplink reference signal) transmitted from the user terminal 20. The received signal processing section 304 may be constituted by a signal processor, a signal processing circuit, or a signal processing apparatus explained on the basis of a common understanding in the technical field of the present invention.

The received signal processing section 304 outputs information decoded by the reception processing to the control section 301. For example, the received signal processing section 304 outputs at least one of a preamble, control information, and UL data to the control section 301. The received signal processing section 304 outputs the reception signals and signals obtained by the reception processing to the measurement section 305.

The measurement section 305 conducts measurements with respect to the received signals. The measurement section 305 may be constituted by a measurer, a measurement circuit, or a measurement apparatus explained on the basis of a common understanding in the technical field of the present invention.

The measurement section 305 may measure, for example, the received power (e.g., reference signal received power (RSRP)), the reception quality (e.g., reference signal received quality (RSRQ)), and the channel state of the received signals. The result of the measurement may be output to the control section 301.

### <User Terminal>

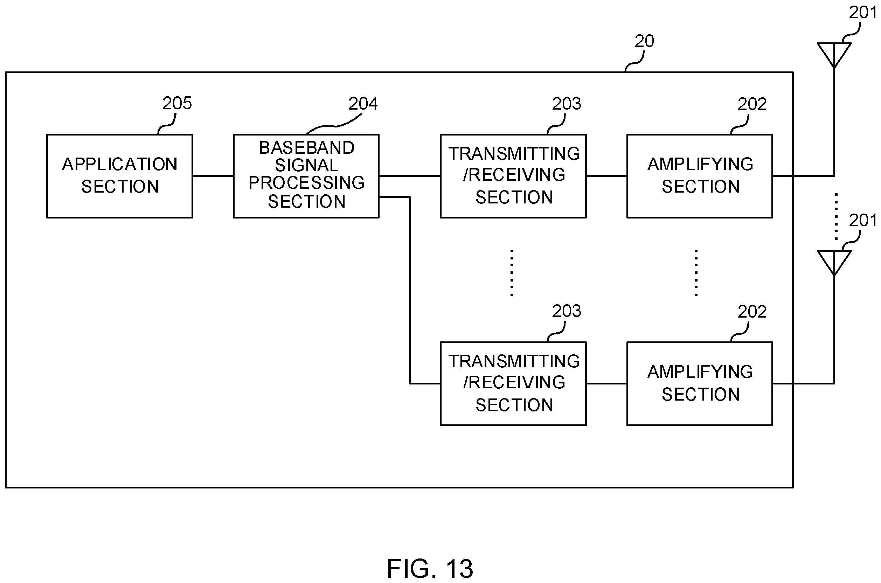

Fig. 13 is a diagram illustrating an exemplary overall configuration of a user terminal according to the present embodiment. The user terminal 20 includes a plurality of transmitting/receiving antennas 201, a plurality of amplifying sections 202, a plurality of transmitting/receiving sections 203, a baseband signal processing section 204, and an application section 205. The user terminal 20 may be configured to include at least one transmitting/receiving antenna 201, at least one amplifying section 202, and at least one transmitting/receiving section 203. The user terminal 20 may be a downlink data receiving apparatus and uplink data transmitting apparatus.

A radio frequency signal received by the transmitting/receiving antenna 201 is amplified by the amplifying section 202. The transmitting/receiving section 203 receives the downlink signal amplified by the amplifying section 202. The transmitting/receiving section 203 frequency-converts the received signal to a baseband signal and outputs it to the baseband signal processing section 204. The transmitting/receiving section 203 may be constituted by a transmitter/receiver, a transmitting/receiving circuit, or a transmitting/receiving apparatus explained on the basis of a common understanding in the technical field of the present invention. The transmitting/receiving section 203 may be configured as a single section, or may be composed of a transmitting section and a receiving section.

On the baseband signal received as input, the baseband signal processing section 204 performs, for example, FFT processing, error correction decoding, and retransmission control reception processing. Downlink data is transferred to the application section 205. The application section 205 performs processing relating to layers higher than the physical layer and the MAC layer. System information and higher-layer control information in the downlink data are also transferred to the application section 205.

From the application section 205, UL data is input to the baseband signal processing section 204. On the UL data, the baseband signal processing section 204 performs, for example, retransmission control transmission processing (e.g., HARQ transmission processing), channel coding, precoding, discrete Fourier transform (DFT) processing, and IFFT processing. The baseband signal processing section 204 then transfers the resulting data to the transmitting/receiving section 203. By the transmitting/receiving section 203, the baseband signal output from the baseband signal processing section 204 is converted to a signal in a radio frequency band and transmitted. The radio frequency signal obtained by frequency conversion in the transmitting/receiving section 203 is amplified by the amplifying section 202 and transmitted from the transmitting/receiving antenna 201.

The transmitting/receiving section 203 receives downlink signals (e.g., downlink control signal (downlink control channel), downlink data signals (downlink data channel and downlink shared channel), downlink reference signals (e.g., DM-RS and CSI-RS), discovery signal, synchronization signal, and broadcast signal). The transmitting/receiving section 203 transmits uplink signals (e.g., uplink control signal (uplink control channel), uplink data signals (uplink data channel and uplink shared channel), and uplink reference signal).

The transmitting/receiving section 203 may transmit a signal on the basis of the result of listening on an unlicensed CC (first frequency band). The signal includes a data signal and an RTS (transmission request signal). The transmitting/receiving section 203 may transmit the signal on one of the unlicensed CC (first frequency band) and the licensed CC (second frequency band). The transmitting/receiving section 203 may receive a response signal responding to the signal. The response signal includes an ACK (positive response) and a CTS (response signal responding to transmission request signal). The transmitting/receiving section 203 may receive the response signal on one of the unlicensed CC (first frequency band) and the licensed CC (second frequency band). The transmitting/receiving section 203 may transmit or receive the result of listening on the unlicensed CC (first frequency band).

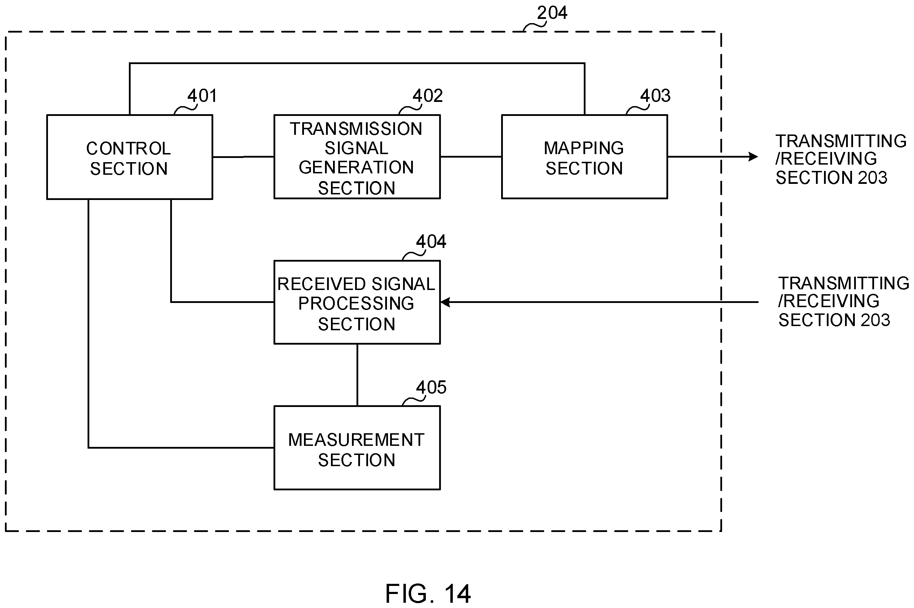

Fig. 14 is a diagram illustrating an exemplary functional configuration of a user terminal according to the present embodiment. Fig. 14 mainly shows functional blocks representing a feature of the present embodiment. That is, the user terminal 20 includes other functional blocks required for radio communication. As illustrated in Fig. 14, the baseband signal processing section 204 of the user terminal 20 includes at least a control section 401, a transmission signal generating unit 402, a mapping section 403, a received signal processing section 404, and a measurement section 405.

The control section 401 controls the entire user terminal 20. The control section 401 may be constituted by a controller, a control circuit, or a control apparatus explained on the basis of a common understanding in the technical field of the present invention.

The control section 401 controls, for example, signal generation by the transmission signal generating unit 402, and signal assignment by the mapping section 403. The control section 401 also controls signal reception processing by the received signal processing section 404, and signal measurement by the measurement section 405.

The control section 401 may control signal transmission or reception on the unlicensed CC (first frequency band) or the licensed CC (second frequency band).

The control section 401 may determine the access method (e.g., first access method or second access method) used for listening, on the basis of the result of comparison between the number of times the transmitting/receiving section 203 has received a response signal and a certain threshold.

Specifically, the control section 401 may determine the access method used for listening, on the basis of the result of comparison between the number of times an ACK (positive response) has been received and a certain threshold (Fig. 5). The control section 401 may determine the access method used for listening, on the basis of the result of comparison between the number of times a CTS (response signal responding to transmission request signal) has been received and a certain threshold (Fig. 6). The control section 401 may determine the access method used for listening, on the basis of the result of comparison between the number of times a notification of busy state has been sent as a listening result and a certain threshold (Fig. 6). The control section 401 may determine the access method used for listening, on the basis of the result of comparison between the number of times the result of listening performed by the apparatus including the control section 401 is "idle state" and the received listening result is "busy state", and a certain threshold (Fig. 7).

The transmission signal generating unit 402 generates uplink signals (e.g., uplink control channel, uplink data channel, and uplink reference signal) on the basis of an instruction from the control section 401 and outputs the generated uplink signals to the mapping section 403. The transmission signal generating unit 402 may be constituted by a signal generator, a signal generating circuit, or a signal generating apparatus explained on the basis of a common understanding in the technical field of the present invention.

The transmission signal generating unit 402 generates an uplink data channel on the basis of an instruction from the control section 401. For example, if a downlink control channel indicated by notification from the radio base station 10 includes an UL grant, the transmission signal generating unit 402 is instructed by the control section 401 to generate an uplink data channel.

The mapping section 403 maps the uplink signals generated by the transmission signal generating unit 402 to radio resources on the basis of an instruction from the control section 401, and outputs the mapped uplink signals to the transmitting/receiving section 203. The mapping section 403 may be constituted by a mapper, a mapping circuit, or a mapping apparatus explained on the basis of a common understanding in the technical field of the present invention.

The received signal processing section 404 performs reception processing (e.g., demapping, demodulation, and decoding) on reception signals received as input from the transmitting/receiving section 203. For example, the reception signals are downlink signals (e.g., downlink control channel, downlink data channel, and downlink reference signal) transmitted from the radio base station 10. The received signal processing section 404 may be constituted by a signal processor, a signal processing circuit, or a signal processing apparatus explained on the basis of a common understanding in the technical field of the present invention. The received signal processing section 404 may constitute a receiving section of the present invention.

On the basis of an instruction from the control section 401, the received signal processing section 404 performs blind decoding of the downlink control channel for scheduling transmission and reception of the downlink data channel, and performs reception processing on the downlink data channel on the basis of the DCI. The received signal processing section 404 estimates a channel gain on the basis of DM-RS or CRS, and demodulates the downlink data channel on the basis of the estimated channel gain.

The received signal processing section 404 outputs information decoded by the reception processing to the control section 401. The received signal processing section 404 outputs, for example, broadcast information, system information, RRC signaling, and DCI to the control section 401. The received signal processing section 404 may output the result of data decoding to the control section 401. The received signal processing section 404 outputs the reception signals and signals obtained by the reception processing to the measurement section 405.

The measurement section 405 conducts measurements with respect to the received signals. The measurement section 405 may be constituted by a measurer, a measurement circuit, or a measurement apparatus explained on the basis of a common understanding in the technical field of the present invention.

The measurement section 405 may measure, for example, the received power (e.g., RSRP), the DL reception quality (e.g., RSRQ), and the channel state of the received signals. The result of the measurement may be output to the control section 401.

### (Hardware Configuration)

The block diagrams used for explaining the aforementioned embodiments each present blocks on a function-by-function basis. These functional blocks (components) are implemented by any combination of pieces of at least one of hardware and software. A method for implementing each functional block is not particularly limited. That is, each functional block may be implemented by a single apparatus that is physically or logically integrated, or may be implemented by two or more physically or logically separate apparatuses that are directly or indirectly connected (e.g., by wired or wireless connection).

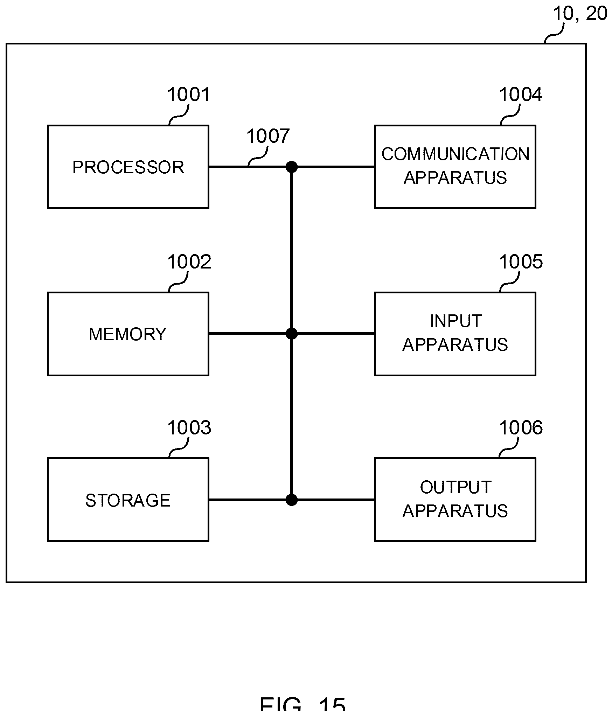

For example, the radio base stations, the user terminals, and so on according to an embodiment of the present disclosure may each function as a computer that performs processing of the radio communication method according to the present disclosure. Fig. 15 is a diagram illustrating an exemplary hardware configuration of a radio base station and a user terminal according to an embodiment. The radio base station 10 and the user terminal 20 described above may each be physically configured as a computer apparatus that includes, for example, a processor 1001, a memory 1002, a storage 1003, a communication apparatus 1004, an input apparatus 1005, an output apparatus 1006, and a bus 1007.

In the following description, the term "apparatus" may be interpreted as a circuit, a device, a unit, or the like. The hardware configuration of the radio base station 10 and the user terminal 20 may be designed to include one or more of the apparatuses illustrated in the drawing, or may be made without including some of the apparatuses.

For example, although only one processor 1001 is shown in the drawing, there may be more than one processor. Processing may be executed by one processor, or may be executed by two or more processors simultaneously, sequentially, or in other ways. The processor 1001 may be implemented on one or more chips.

Each function of the radio base station 10 and the user terminal 20 is implemented by loading certain software (program) onto hardware, such as the processor 1001 or the memory 1002, so as to enable the processor 1001, for example, to perform computation, control communication via the communication apparatus 1004, or control at least one of reading and writing of data from and to the memory 1002 and the storage 1003.

For example, the processor 1001 controls the entire computer by running the operating system. The processor 1001 may be constituted by a central processing unit (CPU) that includes, for example, interfaces with peripherals, a control apparatus, a computing apparatus, and registers. For example, the baseband signal processing section 104 (204) and the call processing section 105, described above, may be implemented by the processor 1001.

The processor 1001 loads, for example, a program (program code), software modules, and data from at least one of the storage 1003 and the communication apparatus 1004, into the memory 1002 and executes various types of processing in accordance with the loaded program, software modules, and data. The program used is one that causes the computer to execute at least some of the operations described in the embodiments. For example, the control section 401 of the user terminal 20 may be implemented by a control program stored in the memory 1002 and running on the processor 1001. Other functional blocks may be implemented in the same manner as this.

The memory 1002 is a computer-readable recording medium and may be constituted by at least one of, for example, a read-only memory (ROM), an erasable programmable ROM (EPROM), an electrically EPROM (EEPROM), a random-access memory (RAM), and other appropriate storage media. The memory 1002 may be referred to, for example, as a register, a cache, or a main memory (main storage apparatus). The memory 1002 can store programs (program code), software modules, and so on that can be executed to perform the radio communication method according to an embodiment of the present disclosure.

The storage 1003 is a computer-readable recording medium and may be constituted by at least one of, for example, a flexible disk, a floppy (registered trademark) disk, a magneto-optical disk (e.g., compact disc (or compact disc ROM (CD-ROM)), digital versatile disc, or Blu-ray (registered trademark) disc), a removable disk, a hard disk drive, a smart card, a flash memory device (e.g., card, stick, or key drive), a magnetic stripe, a database, a server, and other appropriate storage media. The storage 1003 may be referred to as an auxiliary storage apparatus.

The communication apparatus 1004 is hardware (transmitting/receiving device) for communication between computers through at least one of wired and wireless networks, and may be referred to, for example, as a network device, a network controller, a network card, or a communication module. The communication apparatus 1004 may be configured to include, for example, a high frequency switch, a duplexer, a filter, and a frequency synthesizer to implement at least one of frequency division duplex (FDD) and time division duplex (TDD). For example, the transmitting/receiving antennas 101 (201), the amplifying sections 102 (202), the transmitting/receiving sections 103 (203), and the communication path interface 106, described above, may be implemented by the communication apparatus 1004.

The input apparatus 1005 is an input device (e.g., keyboard, mouse, microphone, switch, button, or sensor) that receives input from the outside. The output apparatus 1006 is an output device (e.g., display, speaker, or light-emitting diode (LED) lamp) that performs output to the outside. The input apparatus 1005 and the output apparatus 1006 may be configured as an integral unit (e.g., touch panel) .

The apparatuses, such as the processor 1001 and the memory 1002, are connected by the bus 1007 for communicating information. The bus 1007 may be constituted by a single bus, or may vary from one to another depending on the apparatuses between which it is used.

The radio base station 10 and the user terminal 20 may include hardware components, such as a microprocessor, a digital signal processor (DSP), an application-specific integrated circuit (ASIC), a programmable logic device (PLD), and a field programmable gate array (FPGA). Some or all of the functional blocks may be implemented by these hardware components. For example, the processor 1001 may be implemented on at least one of the hardware components.

### (Modifications)

The terms explained in the present disclosure and the terms required to understand the present disclosure may be replaced by terms that have the same or similar meanings. For example, at least one of a channel and a symbol may be replaced by a signal (signaling), and a signal may be replaced by a message. A reference signal may be abbreviated as RS, and may be referred to, for example, as a pilot or a pilot signal, depending on the standard applied. A component carrier (CC) may be referred to, for example, as a cell, a frequency carrier, or a carrier frequency.

A radio frame may be constituted of one or more periods (frames) in the time domain. The one or more periods (frames) of the radio frame may each be referred to as a subframe. The subframe may be constituted of one or more slots in the time domain. The subframe may be a fixed time length (e.g., 1 ms) independent of numerology.

The numerology may be a set of communication parameters applied to at least one of transmission and reception of a given signal or channel. For example, the numerology may represent at least one of the following: subcarrier spacing (SCS), bandwidth, symbol length, cyclic prefix length, transmission time interval (TTI), the number of symbols per TTI, radio frame configuration, specific filtering processing the transmitter/receiver performs in the frequency domain, and specific windowing processing the transmitter/receiver performs in the time domain, and so on.

A slot may be constituted of one or more symbols (e.g., orthogonal frequency-division multiplexing (OFDM) symbols, or single-carrier frequency-division multiple access (SC-FDMA) symbols) in the time domain. The slot may be a time unit based on numerology.

The slot may include a plurality of mini-slots. Each mini-slot may be constituted of one or more symbols in the time domain. The mini-slot may be referred to as a sub-slot. The mini-slot may be constituted of symbols fewer than slots. A PDSCH (or PUSCH) transmitted in time units larger than mini-slots may be referred to as PDSCH (PUSCH) mapping type A. A PDSCH (or PUSCH) transmitted using mini-slots may be referred to as PDSCH (PUSCH) mapping type B.

The radio frame, subframe, slot, mini-slot, and symbol each represent a time unit in transmitting a signal. The radio frame, subframe, slot, mini-slot, and symbol may each be referred to by a different name corresponding thereto.

For example, one subframe may be referred to as a transmission time interval (TTI), a plurality of contiguous subframes may be referred to as a TTI, or one slot or one mini-slot may be referred to as a TTI. That is, at least the subframe or TTI may be a subframe (1 ms) in the existing LTE, may be a period (e.g., 1 to 13 symbols) shorter than 1 ms, or may be a period longer than 1 ms. A unit representing a TTI may be called, for example, a slot or mini-slot, instead of a subframe.

Here, the TTI refers to, for example, a minimum time unit of scheduling in radio communication. In an LTE system, for example, a radio base station performs scheduling that allocates radio resources (e.g., frequency bandwidth and transmit power that can be used in each user terminal) to user terminals in TTI units. Note that the definition of TTI is not limited to this.

The TTI may be the time unit for transmitting, for example, channel-coded data packets (transport blocks), code blocks, or codewords, or may be the unit of processing, such as scheduling or link adaptation. When a TTI is given, a time segment (e.g., the number of symbols) in which, for example, the transport blocks, code blocks, or codewords are actually mapped may be shorter than the TTI.

When one slot or one mini-slot is referred to as a TTI, one or more TTIs (i.e., one or more slots, or one or more mini-slots) may serve as the minimum time unit of scheduling. The number of slots (or the number of mini-slots) included in the minimum time unit of scheduling may be controlled.

A TTI having a time length of 1 ms may be referred to, for example, as a general TTI (i.e., TTI in LTE Releases 8 to 12), a normal TTI, a long TTI, a general subframe, a normal subframe, a long subframe, or a slot. A TTI shorter than the general TTI may be referred to, for example, as a shortened TTI, a short TTI, a partial or fractional TTI, a shortened subframe, a short subframe, a mini-slot, a sub-slot, or a slot.

The long TTI (e.g., general TTI or subframe) may be interpreted as a TTI having a time length exceeding 1 ms, and the short TTI (e.g., shortened TTI) may be interpreted as a TTI having a TTI length of less than the TTI length of the long TTI and greater than or equal to 1 ms.

A resource block (RB) is a resource allocation unit in the time domain and the frequency domain, and may include one or more consecutive subcarriers in the frequency domain.

The RB may include one or more symbols in the time domain, and may have the length of one slot, one mini-slot, one subframe, or one TTI. One TTI and one subframe may each be constituted of one or more resource blocks.

One or a plurality of RBs may be referred to, for example, as a physical resource block (physical RB (PRB)), a sub-carrier group (SCG), a resource element group (REG), a PRB pair, or an RB pair.

A resource block may be constituted of one or more resource elements (REs). For example, one RE may be a radio resource region of one subcarrier and one symbol.

The structures of the radio frame, subframe, slot, mini-slot, and symbol, described above, are merely examples. For example, configurations, such as the number of subframes included in a radio frame, the number of slots per subframe or radio frame, the number of mini-slots included in a slot, the number of symbols and RBs included in a slot or mini-slot, the number of subcarriers included in an RB, the number of symbols in a TTI, a symbol length, and a cyclic prefix (CP) length, can be variously changed.

The information and parameters described in the present disclosure may be expressed by absolute values, by values relative to certain values, or by other corresponding information. For example, a radio resource may be indicated by a certain index.

Names used for parameters and so on in the present disclosure are in no respect limiting. Numerical expressions that use these parameters may differ from those explicitly disclosed in the present disclosure. Various channels (e.g., physical uplink control channel (PUCCH) and physical downlink control channel (PDCCH)) and information elements can be identified by any suitable names. Therefore, various names assigned to these various channels and information elements are in no respect limiting.

The information, signals, and so on described in the present disclosure may be expressed by using any of various different techniques. For example, data, instructions, commands, information, signals, bits, symbols, chips, and so on that can be referred to throughout the aforementioned description may be expressed as voltages, currents, electromagnetic waves, magnetic fields or magnetic particles, or optical fields or photons, or any combinations of these.

The information, signals, and so on can be output at least "from a higher layer to a lower layer" or "from a lower layer to a higher layer". The information, signals, and so on may be input and output through a plurality of network nodes.

Input and output information, signals, and so on may be stored in a specific place (e.g., memory) or may be managed using a management table. Information, signals, and so on to be input and output may be overwritten, updated, or provided with additions. Output information, signals, and so on may be deleted. Input information, signals, and so on may be transmitted to other apparatuses.

A notification of information is not limited to the aspects/embodiments described in the present disclosure, and may be carried out using other methods. For example, a notification of information may be implemented by physical layer signaling (e.g., downlink control information (DCI) or uplink control information (UCI)), higher-layer signaling (e.g., radio resource control (RRC) signaling, broadcast information (e.g., master information block (MIB) or system information block (SIB)), or medium access control (MAC) signaling), other signals, or combinations of these.

The physical layer signaling may be referred to as Layer 1/Layer 2 (L1/L2) control information (L1/L2 control signal), L1 control information (L1 control signal), or the like. The RRC signaling may be referred to as an RRC message, and may be, for example, an RRC connection setup (RRCConnectionSetup) message or an RRC connection reconfiguration (RRCConnectionReconfiguration) message. The MAC signaling may be sent as a notification using, for example, a MAC control element (MAC CE).

A notification of certain information (e.g., notification of "being X") is not limited to an explicit notification, and may be made implicitly (e.g., by avoiding notification of the certain information or by making notification of different information).

A determination may be made on the basis of a value represented by one bit (0 or 1), a Boolean value (true or false), or a numerical comparison (e.g., comparison with a certain value).

Software should be broadly interpreted to mean, for example, an instruction, an instruction set, code, a code segment, program code, a program, a subprogram, a software module, an application, a software application, a software package, a routine, a subroutine, an object, an executable file, an execution thread, a procedure, or a function, regardless of whether it is referred to as software, firmware, middleware, microcode, or a hardware description language, or by any other names.

Software, an instruction, information, and so on may be transmitted and received through a transmission medium. For example, if software is transmitted from a website, a server, or other remote sources by using at least a wired technique (e.g., coaxial cable, optical fiber cable, twist pair, or digital subscriber line (DSL)) or a wireless technique (e.g., infrared or microwave), then at least one of the wired and wireless techniques falls within the definition of the transmission medium.

The terms "system" and "network" in the present disclosure may be used interchangeably.

In the present disclosure, the terms "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", "bandwidth part (BWP)", and so on may be used interchangeably. A base station may be referred to as a macro cell, a small cell, a femtocell, a picocell, or the like.

A base station can accommodate one or more (e.g., three) cells (also referred to as sectors). When a base station accommodates a plurality of cells, the entire coverage area of the base station can be divided into a plurality of smaller areas, each of which can provide communication services through base station subsystems (e.g., small base stations for indoors (remote radio heads (RRHs)). The term "cell" or "sector" refers to a part of or entire coverage area of at least one of the base station and the base station subsystem that provides communication services within this coverage.

In the present disclosure, the terms such as "mobile station (MS)", "user terminal", "user apparatus (user equipment (UE))", and "terminal" may be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or by some other appropriate terms.

At least one of a base station and a mobile station may be referred to as a transmitting apparatus, a receiving apparatus, or the like. At least one of a base station and a mobile station may be a device mounted on a mobile body, may be a mobile body itself, or the like. The mobile body may be a vehicle (e.g., car or airplane), a mobile body that moves without human intervention (e.g., drone or self-driving car), or a robot (attended or unattended). At least one of a base station and a mobile station includes an apparatus that does not necessarily move during communication operation.

The term "radio base station" in the present disclosure may be replaced with the term "user terminal". For example, each of the aspects/embodiments of the present disclosure may be applied to the configuration where communication between a radio base station and a user terminal is replaced with communication between a plurality of user terminals (which may be referred to, e.g., as device-to-device (D2D) or vehicle-to-everything (V2X)). In this case, the user terminals 20 may be configured to have the functions of the radio base stations 10. The terms such as "uplink" and "downlink" may be replaced with the term (e.g., "side") appropriate for inter-terminal communication. For example, the terms such as "uplink channel" and "downlink channel" may be replaced with the term "side channel".

Similarly, the term "user terminal" in the present disclosure may be replaced with the term "radio base station". In this case, the radio base stations 10 may be configured to have the functions of the user terminals 20.

Some of the operations described as being performed by a base station in the present disclosure may be performed by an upper node of the base station. It will be apparent, in a network including one or more network nodes with base stations, that various operations performed for communication with terminals can be performed by the base station, one or more network nodes other than the base station, or combinations of these. Note that examples of the network nodes include, but are not limited to, mobility management entities (MMEs) and serving gateways (S-GWS).

Each of the aspects/embodiments described in the present disclosure may be used alone or in combination, or may be switched from one to another as execution proceeds. The steps of processing procedure, sequence, flowchart, and so on of each of the aspects/embodiments described in the present disclosure may be switched in order, as long as no inconsistency arises. For example, for the methods described in the present disclosure, various step elements are presented in exemplary order, and the order is not limited to the specific order presented.

Each of the aspects/embodiments described in the present disclosure may be applied to, for example, Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new radio access technology (New RAT), new radio (NR), new radio access (NX), future generation radio access (FX), Global System for Mobile Communications (GSM) (registered trademark), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), and systems using other appropriate radio communication methods and next-generation systems extended on the basis thereof. Each of the aspects/embodiments described above may be applied to a combination of a plurality of systems (e.g., combination of LTE or LTE-A and 5G) .

The phrase "on the basis of" used in the present disclosure does not mean "only on the basis of" unless otherwise specified. In other words, the phrase "on the basis of" means both "only on the basis of" and "at least on the basis of".

Any reference to elements with such designations as "first" and "second", in the present disclosure, does not substantially limit the quantity or order of the elements. These designations may be used as a convenient way to distinguish between two or more elements in the present disclosure. Therefore, a reference to the first and second elements does not imply that only two elements may be employed, or that the first element needs in some way to precede the second element.

The term "determining" used in the present disclosure may include various types of actions. For example, "determining" may be regarded as judging, calculating, computing, processing, deriving, investigating, looking up (e.g., looking up in a table, database, or another data structure), ascertaining, or the like.

The term "determining" may be regarded as "determining" receiving (e.g., receiving information), transmitting (e.g., transmitting information), input, output, accessing (e.g., accessing data in memory), or the like.

The term "determining" may be regarded as "determining" resolving, selecting, choosing, establishing, comparing, or the like. That is, "determining" may be regarded as "determining" a certain type of action.

The term "determining" may be interpreted as "assuming", "expecting", "considering", or the like.

The term "maximum transmit power" in the present disclosure may mean the maximum value of transmit power, the nominal UE maximum transmit power, or the rated UE maximum transmit power.

The terms "connected", "coupled", and any variations of these terms mean any direct or indirect connection or coupling between two or more elements, and may imply the presence of one or more intermediate elements between two elements that are "connected" or "coupled" to each other. The coupling or connection between the elements may be physical, logical, or a combination of the two. For example, the term "connection" may be interpreted as "access".

When two elements are connected in the present disclosure, they may be considered "connected" or "coupled" to each other by using one or more electric wires, cables, printed electrical connections, or the like, and also by using, as some non-limiting and non-inclusive examples, electromagnetic energy with wavelengths in the radio frequency region, microwave region, optical region (both visible and invisible), or the like.

In the present disclosure, the phrase "A and B are different" may mean "A and B are different from each other". For example, the terms "separated" and "coupled" may also be interpreted in this manner.

When the terms "include", "including", and their variations are used in the present disclosure, these terms are intended to be inclusive similarly to the term "comprising". Also, the term "or" used in the present disclosure is intended not to be an exclusive OR.

When articles, such as "a", "an", and "the" in English, are added in translation in the present disclosure, the present disclosure may imply that nouns following these articles are in the plural.

Although the invention according to the present disclosure has been described in detail, it is obvious to those skilled in the art that the invention according to the present disclosure is not limited to the embodiments described in the present disclosure. The invention according to the present disclosure can be implemented in a modified and changed form without departing from the spirit and scope of the invention defined on the basis of the appended claims. The description of the present disclosure is for illustrative purposes, and therefore gives no limiting meaning to the invention of the present disclosure.

## Claims

1. A transmitting apparatus comprising:
a transmitting section configured to transmit a signal on the basis of a result of listening in a first frequency band;
a receiving section configured to receive a response signal responding to the signal; and
a control section configured to determine an access method used for the listening on the basis of a result of comparison between the number of times the response signal has been received and a certain threshold.

2. The transmitting apparatus according to Claim 1, wherein if the number of times a positive response to the signal has been received during a certain time period is less than a certain threshold, the control section changes the access method used for the listening.

3. The transmitting apparatus according to Claim 1 or 2, wherein
the transmitting section transmits a data transmission request signal,
the receiving section receives a response signal responding to the transmission request signal, and
if the number of times the response signal has been received during a certain time period is greater than or equal to a certain threshold, the control section maintains the access method used for the listening.

4. The transmitting apparatus according to Claim 1 or 2, wherein
the transmitting section transmits a signal notifying that the result of listening is a busy state, and
if the number of times the notification of busy state has been sent during a certain time period is greater than or equal to a certain threshold, the control section maintains the access method used for the listening.

5. The transmitting apparatus according to any one of Claims 1 to 4, wherein
the receiving section receives a result of listening performed by a receiving apparatus in the first frequency band, and
the control section determines the access method used for the listening, on the basis of a result of comparison between the number of times the result of listening performed by the receiving apparatus has been different from the result of listening performed by the transmitting apparatus during a certain time period and a certain threshold.

6. The transmitting apparatus according to Claim 3, wherein
the transmitting section transmits the transmission request signal in the first frequency band for which listening before transmission is required, or in a second frequency band for which listening before transmission is not required, and
the receiving section receives the response signal in the first frequency band or in the second frequency band.
